# EUROPÄISCHE PATENTSCHRIFT

(11) **EP 1 604 135 B1**
(45) Veröffentlichungstag und Bekanntmachung des Hinweises auf die Patenterteilung: **23.09.2009**
(21) Anmeldenummer: 04721820.1
(22) Anmeldetag: 19.03.2004
(51) Int. Cl.: F16K 15/02

(54) **RÜCKSCHLAGVENTIL**
NON-RETURN VALVE
CLAPET ANTI-RETOUR

(30) Priorität: 20.03.2003 DE 10312530; 09.04.2003 DE 10316230
(43) Veröffentlichungstag der Anmeldung: 14.12.2005
(73) Patentinhaber: Bosch Rexroth AG, 70184 Stuttgart (DE)
(72) Erfinder: KANE, Brian, J., 97816 Lohr am Main (DE)
(74) Vertreter: Winter, Konrad Theodor
(86) Internationale Anmeldenummer: PCT/DE2004/000578
(87) Internationale Veröffentlichungsnummer: WO 2004/083696

(56) Entgegenhaltungen:
- EP-A- 1 132 668
- US-A- 3 457 949
- US-A- 3 770 009
- US-A- 3 801 233
- US-A- 5 613 518
- US-A1- 2001 039 966

## Beschreibung

Die Erfindung betrifft ein Rückschlagventil nach dem Oberbegriff des Patentanspruchs 1.

Rückschlagventile dienen zur Sperrung eines Druckmittelstroms in eine Richtung und erlauben einen Volumenstrom in die Gegenrichtung.

Ein derartiges Rückschlagventil ist in den Datenblättern RD 20 395/10.95 der Anmelderin offenbart. Dabei ist ein durchströmter metallischer Sitzkolben in einem Ventilgehäuse aufgenommen und in Grundstellung gegen einen Ventilsitz vorgespannt, so daß eine Druckmittelverbindung zwischen zwei Arbeitsanschlüssen in Durchflußrichtung gesperrt ist.

Nachteilig an der bekannten Lösung ist, daß der Fertigungsaufwand zur Herstellung des metallischen Sitzkolben sehr hoch ist.

Des Weiteren ist an der bekannten Lösung nachteilig, daß sie stark zu Undichtheiten neigt.

Ferner ist nachteilig, daß der metallische Sitzkolben schwer ist, und das Rückschlagventil somit ein relativ träges Ansprechverhalten zeigt.

Die Druckschriften EP 1 132 668 A2 und DE 601 11 290 T2 zeigen ein Rückschlagventil mit einem Sitzkolben und einer Druckfeder, die in einem Ventilgehäuse geführt sind. Der Sitzkolben und die Druckfeder werden einstückig aus einem Kunststoff, beispielsweise einem Fluororesin, wie PTFE oder PFA, im Spritzgießverfahren hergestellt. Der Sitzkolben hat einen etwa kegelstumpfförmigen Grundkörper zum Zusteuern einer Druckmittelverbindung, der über vier Verbindungsstege mit der Druckfeder axial beabstandet verbunden ist. Durch diesen Axialabstand des Grundkörpers und der Druckfeder kann in geöffneter Stellung des Rückschlagventils Druckmittel zwischen den Verbindungsstegen hindurch in einen Federraum strömen. Nachteilig bei dieser Lösung ist, dass derartige Sitzkolben aufgrund der geringen Axialführungslänge und den direkt an der Ventilbohrung anliegenden Verbindungsstegen ein relativ träges Ansprechverhalten aufweisen und zu Undichtigkeiten neigen.

Aufgabe der vorliegenden Erfindung ist es, ein Rückschlagventil zu schaffen, das die vorgenannten Nachteile beseitigt und kostengünstig herzustellen ist.

Diese Aufgabe wird gelöst durch ein Rückschlagventil mit den Merkmalen nach dem Patentanspruch 1.

Ein Sitzkolben des erfindungsgemäßen Rückschlagventils ist durch ein Kunststoffspritzgießverfahren hergestellt. Vorteilhaft an dieser Lösung ist, daß der erfindungsgemäße Sitzkolben fertigungstechnisch einfach und kostengünstig herzustellen ist. Weiterhin ist die Kunststoffoberfläche des erfindungsgemäßen Sitzkolbens relativ weich, so daß eine hohe Dichtheit gewährleistet werden kann. Ferner zeichnet sich der erfindungsgemäße Sitzkolben durch ein geringes Gewicht aus, wodurch das Rückschlagventil ein empfindliches Ansprechverhalten zeigt.

Das erfindungsgemäße Rückschlagventil hat einen hohlen Sitzkolben, der in einer Längsbohrung eines Ventilgehäuses geführt ist und in Grundstellung gegen einen Ventilsitz über eine Feder vorgespannt ist, so dass in Grundstellung eine Druckmittelverbindung zwischen zwei Arbeitsanschlüssen in Durchflussrichtung zugesteuert ist. Der Sitzkolben hat einen Bohrungsstern, über dessen Bohrungen in geöffneter Stellung Druckmittel in einen Federraum strömen kann. Dabei hat der Sitzkolben erfindungsgemäß ablaufseitig am Außenumfang eine Vielzahl von taschenartigen Ausnehmungen, die zum ablaufseitigen Federraum hin geöffnet sind, so dass der Sitzkolben im Wesentlichen über die Ausnehmungen voneinander abgrenzende axiale Stege geführt ist.

Durch die Stege, deren Führungsflächen von dem Druckmittel im Federraum benetzt werden, ist der Sitzkolben optimal geführt, und durch die Ausnehmungen wird eine Hysterese verringert.

Ein bevorzugter Kunststoff ist Poly-Ether-Ether-Keton (PEEK), in dem zur Verstärkung der Steifigkeit des Sitzkolbens Kohlefaser, vorzugsweise 30%, eingearbeitet sein kann.

Bei einer Ausführungsform sind sechs Ausnehmungen mit sechs dazwischenliegenden Stegen vorgesehen.

Zur Verbesserung der Führung des Sitzkolbens und zur Verstärkung können zwischen den Bohrungen des Bohrungssterns Führungsvorsprünge ausgebildet sein. Die Führungsvorsprünge sind vorzugsweise dreieckförmig und verjüngen sich stromaufwärts gegen die Druckaufbaurichtung, wobei deren axiale Länge vorzugsweise den Innendurchmesser der Bohrungen entspricht. Der Innendurchmesser und die Anzahl der Bohrungen ist hinsichtlich eines jeweiligen optimalen Durchflußquerschnitts gewählt. Vorzugsweise sind vier Bohrungen vorgesehen.

Um ein Entstehen von Verwirbelungen der Druckmittelströmung in geöffneter Stellung zu vermeiden, kann der Sitzkolben zulaufseitig einen stirnseitigen Anströmkegel haben. Der Anströmkegel kann einen abgerundeten bzw. halbkugelartigen Kopf aufweisen.

Eine Feder zur Vorspannung des Sitzkolbens ist bei einer bevorzugten Ausführungsform in Grundstellung an einem Federteller ebenfalls aus Kunststoff abgestützt. Vorzugsweise hat der Federteller an seinem Außenumfang zumindest eine radiale Dichtlippe, so daß der Federraum dichtend verschlossen ist. Ebenfalls kann stirnseitig an dem Federteller zumindest eine Dichtlippe ausgebildet sein. Ein besonders hohe Dichtheit ist erhältlich, wenn die radialen Dichtlippen entgegen der Druckaufbaurichtung und die stirnseitigen Dichtlippen in Druckaufbaurichtung angestellt sind.

Sonstige vorteilhafte Ausführungsformen sind Gegenstand weiterer Unteransprüche.

Im Folgenden erfolgt eine ausführliche Erläuterung einer bevorzugten Ausführungsform der Erfindung anhand schematischer Darstellungen. Es zeigen
Figur 1 eine Seitenansicht einer Ausführungsform eines erfindungsgemäßen Rückschlagventils und
Figur 2 einen Längsschnitt durch des Rückschlagventil aus Figur 1.

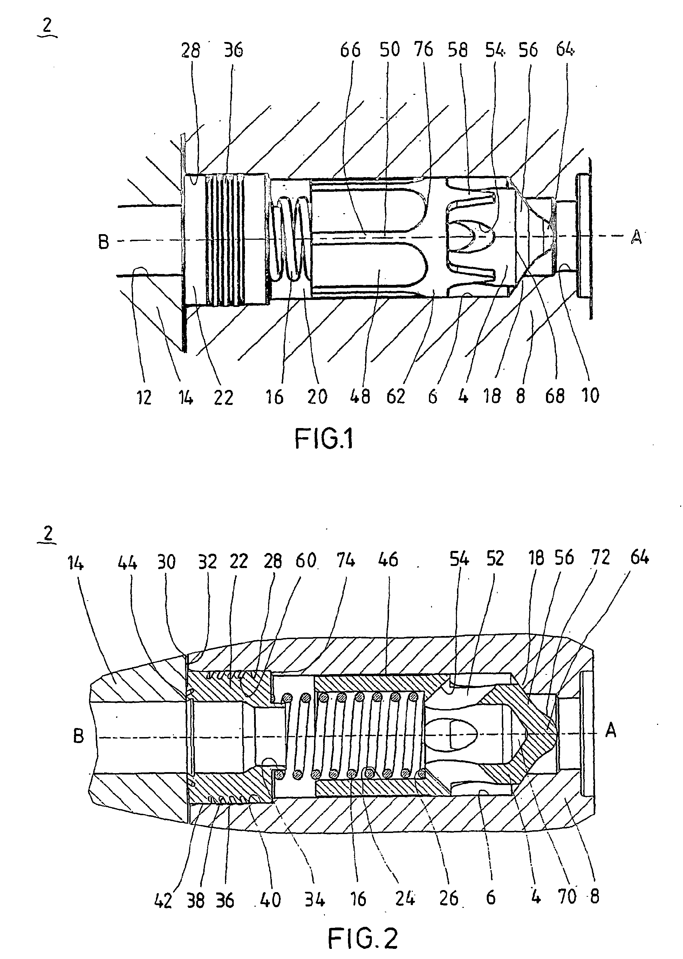

Die Figuren 1 und 2 zeigen eine Seitenansicht einer bevorzugten Ausführungsform eines erfindungsgemäßen direktgesteuerten Rückschlagventils 2 und einen vergrößerten Längsschnitt mit einem durchströmten Sitzkolben 4, der in einer Längsbohrung 6 eines Ventilgehäuses 8 aufgenommen ist. Die Längsbohrung 6 erstreckt sich zwischen einer koaxialen Anschlußbohrung 10 zum Anschluß eines zulaufseitigen Arbeitsanschlusses A und einer koaxialen Anschlußbohrung 12 einer die Längsbohrung 6 verschließenden Anschlußplatte 14 eines ablaufseitigen Arbeitsanschlusses B. Der Sitzkolben 4 ist über eine Feder 16 in seiner Grundstellung gegen einen Ventilsitz 18 vorgespannt. Die Feder 16 ist in einem Federraum 20 angeordnet und stützt sich an einem Federteller 22 in der Längsbohrung 6 ab. Dabei taucht sie in eine Aufnahmebohrung 24 des Sitzkolbens 4 ein (Figur 2) und greift an einer ringartigen Bodenfläche 26 der Aufnahmebohrung 24 an.

Der Sitzkolben 4 ist erfindungsgemäß durch ein Spritzgießverfahren hergestellt. Er ist aus Kunststoff und kann mit Kohlefaser verstärkt sein. Vorzugsweise ist als Kunststoff Poly-Ether-Ether-Keton (PEEK) gewählt und mit 30% Kohlefaser verstärkt. Der Sitzkolben 4 ist als Hohlkolben ausgeführt, wobei die Aufnahmebohrung 24 in Richtung einer Anströmseite 68 des Sitzkolbens 4 radial verjüngt ist. In diese Verjüngung 70 münden Bohrungen 54 eines Bohrungssterns 52. Somit kann in geöffneter Stellung Druckmittel über den Ventilsitz 18 durch die Bohrungen 54 in den Sitzkolben 4 eintreten und in den rückraumseitigen Federraum 20 strömen. Zur Verbesserung der Strömungscharakteristik münden die Bohrungen 54 schräg in Druckaufbaurichtung in die Verjüngung 70. Die Form und Anzahl der Bohrungen 54 ist so gewählt, daß der Durchflußquerschnitt der Bohrungen 54 optimiert ist. Vorzugsweise sind vier Bohrungen 54 vorgesehen.

Zur Vergleichmäßigung des Druckmittelstroms ist an der Anströmseite 68 des Sitzkolbens 4 ein Anströmkegel 56 ausgebildet. Der Anströmkegel 56 geht in einen halbkugelartigen Kopf 64 über, wobei die Umfangsfläche 72 des Kopfes 64 steiler angestellt ist als die des Anströmkegels 56.

Der Sitzkolben 4 ist ablaufseitig in der Längsbohrung 6 radial geführt, wobei zur Vermeidung einer einseitigen Führung des Sitzkolbens 4 in der Längsbohrung 6 und somit zur Verringerung einer Hysterese eine Vielzahl von radialen Ausnehmungen 48 in seinem Außenumfang 46 vorgesehen sind, so daß der Sitzkolben 6 über einzelne, die Ausnehmungen 48 voneinander trennende axiale Stege 50 und einen schmalen Ringbund 62 am Grund 76 der Ausnehmungen 48 geführt ist.

Die taschenartigen Ausnehmungen 48 sind zum Federraum 20 hin geöffnet und erstrecken sich fingerartig in Richtung des Anströmkegels 56. Die Anzahl der Ausnehmungen 48 ist in Hinblick auf die Breite der umfangsseitigen Führungsflächen 66 der Stege 50 optimiert. Vorzugsweise sind sechs Ausnehmungen 48 mit sechs Stegen 50 vorgesehen.

Der Ringbund 62 geht stromaufwärts in Richtung des Anströmkegels 56 in axiale dreieckförmige Führungsvorsprünge 58 über. Die Führungsvorsprünge 58 erstrecken sich zwischen den Bohrungen 54 und verjüngen sich in Richtung der Anströmkegel 56. Dabei ist die axiale Länge der Führungsvorsprünge 58 bevorzugterweise so gewählt, daß diese etwa den Innendurchmesser der Bohrungen 54 entspricht. Im Bereich der Führungsvorsprünge 58 hat der Sitzkolben 4 den gleichen Außendurchmesser wie im Bereich des Ringbundes 62 und im Bereich der Stege 50, so daß ebenfalls eine Führung des Sitzkolbens 4 in der Längsbohrung 6 über die Führungsvorsprünge 58 erfolgt und somit die axiale Führungslänge entsprechend um die axiale Ausdehnung der Führungsvorsprünge 58 verlängert ist. Zusätzlich wird durch die Anordnung der Führungsvorsprünge 58 zwischen den Bohrungen 54 dieser durch die Bohrungen 54 strukturgeschwächte Bereich des Sitzkolbens 4 verstärkt.

Der Federteller 22 ist aus einem Kunststoff hergestellt, der bevorzugterweise weicher als der Kunststoff des Sitzkolbens 4 ist. Er ist in einer radialen Zurückstufung 28 der Längsbohrung 8 eingesetzt und über Anlage mit der Anschlußplatte 14 in seiner Position axial fixiert. Die axiale Länge der Zurückstufung 28 ist so gewählt, daß gegenüberliegende Oberflächen 30, 32 der Anschlußplatte 14 und des Ventilgehäuses 8 im montierten Zustand voneinander beabstandet sind und die Anschlußplatte 14 nur in Anlage mit dem Federteller 22 gebracht ist, so daß dieser gegen eine Schulter 74 der Zurückstufung 28 gedrückt wird. Um ein Abströmen des Druckmittels aus dem Federraum 20 zu ermöglichen, ist in dem Federteller 22 eine zur Längsbohrung 6 des Ventilgehäuses 8 und zur Anschlußbohrung 12 der Anschlußplatte 14 koaxiale Durchgangsbohrung 34 ausgebildet.

Am Außenumfang 42 des Federtellers 22 sind radiale Dichtlippen 36 zum Abdichten des Federraums 20 gegenüber der Anschlußplatte 14 vorgesehen. Die Dichtlippen 36 verlaufen parallel zueinander und sind durch Ringnuten 38 herausgebildet. Die Dichtlippen 36 verlaufen schräg zur Längsachse der Längsbohrung 6, wobei sie von den Nutgründen 60 der Ringnuten 38 aus betrachtet entgegen der Druckaufbaurichtung in Richtung des Ventilsitzes 18 angestellt sind. Dieser schräge Verlauf in Kombination mit dem weichen Kunststoff hat den Vorteil, daß sich die Dichtlippen 36 durch das Druckmittel selbständig aufrichten bzw. anstellen und somit gegen den Innenumfang 40 der Zurückstufung 32 der Längsbohrung 6 gedrückt werden. Zur Abdichtung der ablaufseitigen Anschlußbohrung 12 der Anschlußplatte 14 ist stirnseitig zumindest eine Dichtlippe 44 vorgesehen, die schräg zur Längsbohrung 6, jedoch im Gegensatz zu den radialen Dichtlippen 36 in Druckaufbaurichtung angestellt ist, so daß durch den Druck des abströmendes Druckmittels diese angestellt bzw. aufgerichtet werden können.

Durch die Herstellung des Sitzkolbens 4 in einem Kunststoffspritzgießverfahren ist der Fertigungsaufwand wesentlich reduziert und somit der Sitzkolben 4 kostengünstig und schnell herzustellen.

Ferner kann dadurch, daß durch die relativ weiche Kunststoffoberfläche des Sitzkolbens 4 Verschmutzungen, die sich im Druckmittel befinden und z.B. am Ventilsitz 18 abgelagert haben, in den Sitzkolben 4 eingedrückt werden können, eine hohe Dichtheit erreicht werden.

Weiterhin kann durch die erfindungsgemäße Verwendung von Kunststoff der Sitzkolben 4 wesentlicher leichter als bekannte metallische Sitzkolben ausgeführt sein, so daß das erfindungsgemäße Rückschlagventil 4 ein verbessertes Ansprechverhalten zeigt. Dieses Ansprechverhalten ist durch die Ausnehmungen 48 im Außenumfang 46 des Sitzkolbens 4 zusätzlich verbessert, wobei durch die Führungsvorsprünge 58 die axiale Führungslänge der Stege 50 des Sitzkolbens 4 verlängert ist. Des Weiteren ist das Ansprechverhalten des erfindungsgemäßen Rückschlagventils 2 durch den Anströmkegel 56 verbessert, da das Druckmittel den Sitzkolben 4 optimal anströmen und im geöffneten Zustand verbessert über den Ventilsitz 18 abströmen kann.

Es ist selbstverständlich, daß, auch wenn die vorbeschriebene Ausführungsform ein Rückschlagventil mit zwei axialen Arbeitsanschlüssen zeigt, der erfindungsgemäße Sitzkolben 4 ebenfalls bei Rückschlagventilen mit einem axialen und einem radialen Arbeitsanschluß einsetzbar ist.

Offenbart ist ein Rückschlagventil mit einem in einem Ventilgehäuse in Grundstellung gegen einen Ventilsitz vorgespannten Sitzkolben, der durch ein Kunststoffspritzgießverfahren hergestellt ist.

### Bezugszeichenliste

- 2: Rückschlagventil
- 4: Sitzkolben
- 6: Längsbohrung
- 8: Ventilgehäuse
- 10: Anschlußbohrung
- 12: Anschlußbohrung
- 14: Anschlußplatte
- 16: Feder
- 18: Ventilsitz
- 20: Federraum
- 22: Federteller
- 24: Aufnahmebohrung
- 26: Bodenfläche
- 28: Zurückstufung
- 30: Oberfläche
- 32: Oberfläche
- 34: Durchgangsbohrung
- 36: Dichtlippe
- 38: Ringnut
- 40: Innenumfang
- 42: Außenumfang
- 44: Dichtlippe
- 46: Außenumfang
- 48: Ausnehmungen
- 50: Steg
- 52: Bohrungsstern
- 54: Bohrungen
- 56: Anströmkegel
- 58: Führungsvorsprung
- 60: Nutgrund
- 62: Ringbund
- 64: Kopf
- 66: Führungsfläche
- 68: Anströmseite
- 70: Verjüngung
- 72: Umfangsfläche
- 74: Schulter
- 76: Grund

## Patentansprüche

1. Rückschlagventil mit einem hohlen Sitzkolben (4), der in einer- Längsbohrung (6) eines Ventilgehäuses (8) geführt ist und in Grundstellung gegen einen Ventilsitz (18) über eine Feder (16) vorgespannt ist, so dass in Grundstellung eine Druckmittelverbindung zwischen zwei Arbeitsanschlüssen (A, B) in Durchflussrichtung zugesteuert ist, wobei der Sitzkolben (4) durch ein Kunststoffspritzgießverfahren hergestellt ist und einen Bohrungsstern (52) hat, über dessen Bohrungen (54) in geöffneter Stellung Druckmittel in einen Federraum (20) strömen kann, **dadurch gekennzeichnet, dass** der Sitzkolben (4) ablaufseitig am Außenumfang (46) eine Vielzahl von taschenartigen Ausnehmungen (48) hat, die zum ablaufseitigen Federraum (20) hin geöffnet sind, so dass der Sitzkolben (4) im Wesentlichen über die Ausnehmungen (48) voneinander abgrenzende axiale Stege (50) geführt ist.

2. Rückschlagventil nach Patentanspruch 1 **dadurch gekennzeichnet, dass** der Sitzkolben (4) aus dem Kunststoff PEEK hergestellt ist.

3. Rückschlagventil nach Patentanspruch 1 oder 2 **dadurch gekennzeichnet, dass** der Sitzkolben (4) mit 30% Kohlefaser verstärkt ist.

4. Rückschlagventil nach einem der vorhergehenden Patentansprüche **dadurch gekennzeichnet, dass** sechs Ausnehmungen (48) und vier Bohrungen (54) vorgesehen sind.

5. Rückschlagventil nach einem der vorhergehenden Patentansprüche **dadurch gekennzeichnet, dass** zwischen den Bohrungen (54) Führungsvorsprünge (58) ausgebildet sind.

6. Rückschlagventil nach Patentanspruch 5 **dadurch gekennzeichnet, dass** die Führungsvorsprünge (58) dreieckförmig ausgebildet sind und sich in Anströmrichtung verjüngen.

7. Rückschlagventil nach Patentanspruch 5 oder 6 **dadurch gekennzeichnet, dass** die Führungsvorsprünge (58)-jeweils eine axiale Länge haben, die etwa den Innendurchmessern der Bohrungen (54) entspricht.

8. Rückschlagventil nach einem der vorhergehenden Patentansprüche **dadurch gekennzeichnet, dass** der Sitzkolben (4) einen Anströmkegel (56) hat.

9. Rückschlagventil nach Patentanspruch 8 **dadurch gekennzeichnet, dass** der Anströmkegel (56) einen abgerundeten Kopf (62) hat.

10. Rückschlagventil nach einem der vorhergehenden Patentansprüche **dadurch gekennzeichnet, dass** die Feder (16) über einen Federteller (22) aus Kunststoff im Ventilgehäuse (8) abgestützt ist.

11. Rückschlagventil nach Patentanspruch 10 **dadurch gekennzeichnet, dass** der Federteller (22) an seinem Außenumfang (42) und/oder stirnseitig zumindest eine Dichtlippe (36, 44) hat.

12. Rückschlagventil nach Patentanspruch 11 **dadurch gekennzeichnet, dass** die radialen Dichtlippen (36) gegen die Druckaufbaurichtung und die stirnseitigen Dichtlippen (44) in Druckaufbaurichtung angestellt sind.

## Claims

1. A non-return valve comprising a hollow sealing piston (4) guided in a longitudinal bore (6) of a valve housing (8) and biased against a valve seat (18) by means of a spring (16) in a basic position, so that in the basic position a pressure medium connection between two working ports (A, B) in the direction of flow therethrough is closed, said sealing piston (4) being manufactured by a plastics injection molding technique and having a star configuration of bores (52), via the bores (54) of which pressure medium may flow into a spring chamber (20) in the opened position, **characterized in that** said sealing piston (4) includes at the outer periphery (46) on its drain side a multiplicity of pocket-type recesses (48) that are opened toward the drain-side spring chamber (20), so that the sealing pison (4) is essentially guided via axial webs (50) delimiting the recesses (48) from each other.

2. The non-return valve according to claim 1, **characterized in that** the sealing piston (4) is manufactured of the plastics material PEEK.

3. The non-return valve according to claim 1 or 2, **characterized in that** the sealing piston (4) is reinforced by 30% of carbon fiber.

4. The non-return valve according to any one of the preceding claims, **characterized in that** six recesses (48) and four bores (54) are provided.

5. The non-return valve according to any one of the preceding claims, **characterized in that** guide projections (58) are formed between the bores (54).

6. The non-return valve according to claim 5, **characterized in that** the guide projections (58) have a triangular shape and taper in the flow-receiving direction.

7. The non-return valve according to claim 5 or 6, **characterized in that** the guide projections (58) each have an axial length approximately corresponding to the inner diameters of the bores (54).

8. The non-return valve according to any one of the preceding claims, **characterized in that** the sealing piston (4) comprises a flow-receiving cone (56).

9. The non-return valve according to claim 8, **characterized in that** the flow-receiving cone (56) has a rounded head (62).

10. The non-return valve according to any one of the preceding claims, **characterized in that** the spring (16) is supported in the valve housing (8) by a spring cup (22) made of plastics.

11. The non-return valve according to claim 10, **characterized in that** the spring cup (22) has at its outer periphery (42) and/or on its front side at least one sealing lip (36,44).

12. The non-return valve according to claim 11, **characterized in that** the radial sealing lips (36) are inclined against the direction of pressure build-up, and the front-side sealing lips (44) are inclined in the direction of pressure build-up.

## Revendications

1. Clapet anti-retour avec un piston siège (4) creux qui est guidé dans un alésage longitudinal (6) d'un boîtier de clapet (8) et qui est précontraint dans la position de base contre un siège de clapet (18) par le biais d'un ressort (16), de sorte que dans la position de base, une liaison du milieu sous pression entre deux raccords de travail (A, B) est fermée par commande dans le sens d'écoulement, le piston siège (4) étant fabriqué grâce à un procédé de moulage par injection de plastique et présentant une étoile d'alésages (52), par le biais desquels alésages (54) en position ouverte, du milieu sous pression peut s'écouler dans une chambre à ressort (20), **caractérisé en ce que** le piston siège (4) a, côté écoulement, sur la périphérie extérieure (46), une pluralité d'évidements (48) en forme de poche, qui sont ouverts vers la chambre à ressort (20) côté écoulement, de sorte que le piston siège (4) est guidé essentiellement par le biais de traverses (50) axiales délimitant les évidements (48) les uns des autres.

2. Clapet anti-retour selon la revendication 1, **caractérisé en ce que** le piston siège (4) est fabriqué en plastique PEEK.

3. Clapet anti-retour selon la revendication 1 ou 2, **caractérisé en ce que** le piston siège (4) est renforcé avec 30 % de fibre de carbone.

4. Clapet anti-retour selon l'une quelconque des revendications précédentes, **caractérisé en ce que** six évidements (48) et quatre alésages (54) sont prévus.

5. Clapet anti-retour selon l'une quelconque des revendications précédentes, **caractérisé en ce que** des saillies de guidage (58) sont réalisées entre les alésages (54).

6. Clapet anti-retour selon la revendication 5, **caractérisé en ce que** les saillies de guidage (58) sont réalisées de manière triangulaire et s'effilent dans le sens d'afflux.

7. Clapet anti-retour selon la revendication 5 ou 6, **caractérisé en ce que** les saillies de guidage (58) ont respectivement une longueur axiale qui correspond à peu près aux diamètres intérieurs des alésages (54).

8. Clapet anti-retour selon l'une quelconque des revendications précédentes, **caractérisé en ce que** le piston siège (4) a un cône d'afflux (56).

9. Clapet anti-retour selon la revendication 8, **caractérisé en ce que** le cône d'afflux (56) a une tête arrondie (62).

10. Clapet anti-retour selon l'une quelconque des revendications précédentes, **caractérisé en ce que** le ressort (16) est supporté dans le boîtier de clapet (8) par le biais d'une coupelle de ressort (22) en plastique.

11. Clapet anti-retour selon la revendication 10, **caractérisé en ce que** la coupelle de ressort (22) a au moins une lèvre d'étanchéité (36, 44) au niveau de sa périphérie extérieure (42) et/ou côté frontal.

12. Clapet anti-retour selon la revendication 11, **caractérisé en ce que** les lèvres d'étanchéité radiales (36) sont placées dans le sens contraire au sens d'établissement de la pression et les lèvres d'étanchéité frontales (44) dans le sens d'établissement de la pression.
